# EUROPEAN PATENT SPECIFICATION

(11) **EP 1 818 943 B1**
(45) Date of publication and mention of the grant of the patent: **18.03.2009**
(21) Application number: 07100085.5
(22) Date of filing: 04.01.2007
(51) Int. Cl.: G21K 4/00, C09K 11/85

(54) **Radiation image storage panel and method of preparing said panel**
Strahlungsbildspeicherschirm und Herstellungsverfahren dafür
Ecran pour l'enregistrement d'une image obtenue par rayonnement et procédé de préparation de cet écran

(30) Priority: 09.02.2006 EP 06101437
(43) Date of publication of application: 15.08.2007
(73) Proprietor: Agfa HealthCare NV, 2640 Mortsel (BE)
(72) Inventor: Tahon, Jean-Pierre, 2640, Mortsel (BE); Uyttendaele, Carlo, 2640, Mortsel (BE); Leblans, Paul, 2640, Mortsel (BE)
(74) Representative: Theunis, Patrick

(56) References cited:
- EP-A- 1 286 362
- EP-A- 1 349 177
- US-A1- 2003 104 245
- US-A1- 2003 183 777
- US-A1- 2005 077 479

## Description

The present invention is related with a method of preparing a binderless radiation image storage panel provided with a phosphor layer, having improved adhesiveness onto its support.

### BACKGROUND OF THE INVENTION

Radiation image recording systems wherein a radiation image is recorded on a photostimulable phosphor screen by exposing the screen to image-wise modulated penetrating radiation are widely used nowadays.

The recorded image is reproduced by stimulating the exposed photostimulable phosphor screen by means of stimulating radiation and by detecting the light that is emitted by the phosphor screen upon stimulation and converting the detected light into an electrical signal representation of the radiation image.

In several applications e.g. in mammography, sharpness of the image is a very critical parameter. Sharpness of an image that has been read out of a photostimulable phosphor screen depends not only on the sharpness and resolution of the screen itself but also on the resolution obtained by the read out system which is used.

In conventional read out systems used nowadays a scanning unit of the flying spot type is commonly used. Such a scanning unit comprises a source of stimulating radiation, e.g. a laser light source, means for deflecting light emitted by the laser so as to form a scanning line on the photostimulable phosphor screen and optical means for focussing the laser beam onto the screen.

Examples of such systems are the Agfa Diagnostic Systems, denominated by the trade name ADC 70 and Agfa Compact. In these systems photostimulable phosphor screens are commonly used which comprise a BaFBr:Eu phosphor.

The resolution of the read out apparatus is mainly determined by the spot size of the laser beam. This spot size in its turn depends on the characteristics of the optical light focussing arrangement. It has been recognised that optimizing the resolution of a scanning system may result in loss of optical collection efficiency of the focussing optics. As a consequence an important fraction of the laser light is not focussed onto the image screen. A severe prejudice exists against the use of systems having an optical collection efficiency of the focussing optics which is less than 50% because these systems were expected not to deliver an adequate amount of power to the screen in order to read out this screen to a sufficient extent within an acceptable scanning time. A solution has therefor been sought and found as disclosed in EP-A 1 065 523 and corresponding US-A 6,501,088. Therein use has been made of a method for reading a radiation image that has been stored in a photostimulable phosphor screen comprising the steps of scanning said screen by means of stimulating radiation emitted by a laser source, detecting light emitted by said screen upon stimulation, converting detected light into an electrical signal representation of said radiation image, wherein said photostimulable phosphor screen comprises a divalent europium activated cesium halide phosphor wherein said halide is at least one of chloride and bromide and said laser beam is focussed so that the spot diameter of the laser spot emitted by said laser, measured between 1/e² points of the gaussian profile of said laser beam is smaller than 100 µm. Object of that invention to provide a method and a system for reading a radiation image that has been stored in a photostimulable phosphor screen was resulting, besides a method and a system for reading a radiation image stored in a photostimulable phosphor screen having a needle-shaped storage phosphor layer, in a method and system yielding a high sharpness.

In US-A 2004/0149929 a radiation image storage panel has been disclosed, composed of a support, a phosphor matrix compound layer covering a surface of the support at a coverage percentage of 95% or more, and a stimulable phosphor layer (which is composed of multiple prismatic stimulable phosphor crystals standing on the phosphor matrix compound layer) formed on the phosphor matrix compound layer, thereby providing a high peel resistance between the support and the stimulable phosphor layer, a high sensitivity, and a reproduced radiation image of high quality.

However, in a radiation image transformation panel, in order to attain the desired radiation absorbing power the needle shaped europium doped cesium halide storage phosphor must be formed in a layer having a thickness of about 200-800 µm. Since the parent compound of the photostimulable phosphor consisting of alkali halide compound, such as CsBr, has a large thermal expansion coefficient of about 50x10⁻⁶/°K, cracks may appear in such a relatively thick layer so that adhesion of the storage phosphor layer onto the support substrate may become a problem, leading to delamination. Factors having a negative influence onto cracking and delamination are related, besides temperature of the substrate and changes thereof during the vapour deposition process, with the pressure of inert gas in the vacuum chamber and with presence of impurities, which have a significant influence upon crystallinity of the deposited phosphor layer during said vapour deposition process. In order to solve that problem, a solution has been proposed in JP-A 2005-156411. In that application a first vapour deposited layer was formed onto the substrate, wherein said layer was containing an alkali halide compound with a molecular weight smaller than the parent compound of the photostimulable phosphor. The layer with the vapour deposited stimulable europium doped cesium halide phosphor was further deposited thereupon. Nevertheless as a first layer between substrate and storage phosphor layer is a vapour deposited layer again, same problems were met with respect to cracks and delamination and the expected improvement with respect to cracks and delamination was not yet fully obtained.

In US-A 6,870,167 a process for the preparation of a radiation image storage panel having a phosphor layer which comprises a phosphor comprising a matrix component and an activator component, which comprises the steps of: forming on a substrate a lower prismatic crystalline layer comprising the matrix component by vapor deposition; and forming on the lower prismatic crystalline layer an upper prismatic crystalline layer comprising the matrix component and the activator component by vapor deposition as an arrangement favorable for crystallinity of said upper layer. In favour of adhesion however it has been proposed in US-Application 2005/51736 to make use of spherical shaped phosphors in the lower layer.

US 2005/077479 discloses a radiation storage panel comprising a support, an underlayer and a phosphor layer. The support B made of Al, the underlayer B CsBr and the phosphor layer B stimulable CsBr : Eu in form of columnar crystalline structure. The phosphor layer is formed by vapour deposition.

When performing vapour deposition techniques in order to prepare phosphor layers onto dedicate substrates, a highly desired substrate material whereupon the scintillator or phosphor material should be deposited is made of glass, a ceramic material, a polymeric material or a metal. As a metal base material use is generally made of flexible metal sheets of aluminum, steel, brass, titanium and copper. Particularly preferred as flexible substrate in the method of the present invention is aluminum as a very good heat-conducting material allowing a perfect homogeneous temperature over the whole substrate. As particularly useful aluminum substrates, without however being limited thereto, brightened anodized aluminium, anodized aluminium with an aluminium mirror and an oxide package and anodized aluminium with a silver mirrror and an oxide package available from ALANOD, Germany, are recommended. So as a preferred flexible substrate support an anodized aluminum support layer is recommended. Such an anodized aluminum support layer may have a thickness in the range of from 50 to 500 µm, and more preferably in the range from 200 to 300 µm. Such an anodized aluminum substrate has shown to be particularly favorable indeed with respect to adhesion characteristics with respect to vapor deposited phosphors or scintillators and even bending of that flexible aluminum support coated with a scintillator layer having a thickness of 500 µm up to 1000 µm, does not cause "cracks" or delamination of scintillator or phosphor "flakes". No problems have indeed been encountered with respect to occurrence of undesirable cracks in the phosphor layer when prepared in a vapor deposition apparatus in optimised conditions.

It has to be noted however that in order to perform vapour deposition of two layers, requires two different processes in a vapour depositing apparatus, at least from a point of view of depositing different raw materials in each layer. Moreover as it is known that increased dopant amounts in the upper layer lead to a desired higher sensitivity of the storage phosphor screen thus formed, it can be expected that higher dopant amounts lead to enhanced cracking and decreased adhesion of the coated layers. Otherwise in order to have better reflection properties in favour of reflection of light emitted upon stimulation of the storage phosphors and, as a consequence thereof, an enhanced sensitivity, it can be expected that a more mirror-like smoother support surface is not in favour of a better adhesion of phosphor layers, deposited thereupon.

### SUMMARY OF THE INVENTION

Therefor it is an object of the present invention to further improve adhesion of the vapour deposited needle-shaped cesium halide phosphor layer. More particularly it is an object of the present invention to take adequate measures in order to avoid cracks, thus improving layer adhesion onto the substrate support, even when introducing higher amounts of dopants in the layers, thereby envisaging a higher sensitivity. Otherwise it is an object of the present invention to improve adhesion between support and phosphor layer, even when making use of smoother supports, providing sensitivity enhancing reflection.

The above-mentioned advantageous effects have been realised by providing a method of preparing a storage phosphor panel having the specific features set out in claim 1. Specific features for preferred embodiments of the invention are set out in the dependent claims.

Further advantages and embodiments of the present invention will become apparent from the following description.

### DETAILED DESCRIPTION OF THE INVENTION

According to the present invention in a method of preparing a radiation image storage panel comprises, as a layer arrangement of consecutive layers, a support, a sublayer and a stimulable phosphor layer comprising needle-shaped stimulable phosphor crystals, wherein that said sublayer is a binderless non-vapour deposited layer, at least comprising an inorganic alkali metal halide salt compound, it has been unexpectedly found that said binderless non-vapour deposited sublayer, when comprising as a halide compound an inorganic alkali metal halide salt compound selected from the group consisting of sodium fluoride, sodium chloride, sodium bromide, potassium fluoride, potassium chloride, potassium bromide, rubidium fluoride, rubidium chloride, rubidium bromide, cesium fluoride, cesium chloride and cesium bromide, wherein said binderless non-vapour deposited sublayer is coated from a solution by means of a coating technique selected from the group consisting of dip-coating, bar-coating, roller-coating and knife-coating, followed by drying, and wherein said phosphor layer is coated by a technique selected from the group consisting of physical vapor deposition, chemical vapor deposition and an atomization technique, clearly shows an improved adhesiveness of the stimulable phosphor layer.

In a more preferred embodiment according to the method of the present invention said sublayer further comprises a silicon compound. Said silicium compound is an inorganic or an organic compound.

In one embodiment thereof according to the method of the present invention said silicium compound is an inorganic colloidal silica.

Especially colloidal silicas having a specific surface area between 100 and 600 m²/g are preferred.

In another embodiment an organic silicon compound is used, as e.g. siloxanes, silazanes and siloxazanes as an oligmeric or polymeric structure.

According to the method of the present invention, said inorganic alkali metal halide salt compound in said sublayer is a compound selected from the group consisting of sodium fluoride, sodium chloride, sodium bromide, potassium fluoride, potassium chloride, potassium bromide, rubidium fluoride, rubidium chloride, rubidium bromide, cesium fluoride, cesium chloride and cesium bromide. Although fluoride compounds show an even better corrosion resistance than other halide compounds, especially the said other halide compounds provide improved adhesive strength, in that in tape adhesion tests, when a tape is adhered onto the storage phosphor layer of a panel, no breakage is observed between said storage phosphor layer and said sublayer or between said sublayer and said panel support.

According to the method of the present invention, said stimulable phosphor layer comprises needle-shaped phosphor crystals having an alkali metal halide as a matrix or base compound and a lanthanide as an activator or dopant compound.

In a particular embodiment according to the method of the present invention, said said needle-shaped stimulable phosphor is a CsBr:Eu phosphor. CsBr:Eu especially selected from a viewpoint of high sensitivity and high sharpness, is advantageously provided with amounts of Eu as an activator or dopant, in the range from 0.0001 to 0.01 mole/mole of CsBr, and more preferably from 0.0003 to 0.005 mole/mole. In the case of a stimulable CsBr:Eu phosphor, the europium compound of the evaporation source preferably may start from a divalent europium Eu²⁺ compound and a trivalent Eu³⁺ compound: said europium compound may be EuBrₓ in which x satisfies the condition of 2.0 ≤ x ≤ 2.3, wherein a europium compound containing the divalent europium compound as much as possible, i.e. at least 70%, is desired.

Although the thickness of the phosphor layer changes with the sensitivity class of the photostimulable phosphor, it is desirable to deposit a phosphor layer having a thickness from 100 µm to 1000 µm, more preferable from 200 µm to 800 µm, and still more preferable from 300 µm - 700 µm. Too thin a phosphor layer causes too little absorbed amounts of radiation, an increased transparency, and a deteriorated image quality of the obtained radiation image, whereas too thick a phosphor layer will cause image quality to decrease, due to a lowered sharpness.

In a further particular embodiment according to the method of the present invention, said matrix compound and said alkali metal halide salt compound have same composition. For a CsBr:Eu phosphor, a sublayer having a bromide salt as a halide salt will be preferred in that case. Especially, desired from the sublayer is a low radiation absorbing power, and also when radiation exposure is from the rear side of a substrate, i.e. from the side opposite to the phosphor layer side at the radiation image transformation panel, attenuation of a radiation will be low when use is made of KBr as a bromide salt.
According to the method of the present invention, a method of preparing a radiation image storage panel is further offered, wherein said binderless non-vapour deposited sublayeris coated from a solution by means of a coating technique selected from the group consisting of dip-coating, bar-coating, roller-coating and knife-coating, followed by drying. Coatings are made from aqueous or non-aqueous solutions or from mixtures of aqueous and non-aqueous solutions. In the case of purely aqueous solutions, an alkali metal halide salt concentration of at least 0.1 M is preferred, depending on the solubility of said salt in aqueous solutions, which depends on temperature. It is recommended to perform drying in a way in order to get a layer, homogeneous in thickness. An average thickness of a sublayer is e.g. in the range from 0.05 µm to 10 µm, and more preferably in the range from 0.5 µm to 5 µm. Outside these ranges, for a thinner sublayer no improved adhesiveness will be attained as envisaged, whereas for a thicker sublayer an undesirable radiation absorption effect may occur as well as an increased risk for loss in adhesion again. Variations in thickness of the sublayer should be in the range from at most 10%, and, more preferably, at most 5%. It is moreover recommended to control the drying step or drying conditions in such a way that micro-structures at the surface should not result in too high a roughness at the surface. An average roughness calculated after having measured with a perth-o-meter at least at 10 points at said surface should e.g. not exceed a value of 5 µm, more particularly a value of 3 µm, and even not a value of 1 µm.

In a method of preparing a radiation image storage panel according to the method of the present invention, said phosphor layer is a binderless phosphor layer, coated onto the sublayer by a technique selected from the group consisting of physical vapor deposition, chemical vapor deposition and an atomization technique. As an atomization technique, electron beam vaporization can be used, as has e.g. been described in US-A's 6,740,897 and 6,875,990 and in US-Applications 2002/050570, 2004/075062 and 2004/149931. In the electron beam evaporation technique, an electron beam generated by an electron gun is applied onto the evaporation source and an accelerating voltage of electron beam preferably is in the range of 1.5 kV to 5.0 kV. By applying the electron beam, the evaporation source of matrix component and activator element is heated, vaporized, and deposited on the substrate. Physical vapour deposition techniques as suitable for use in the deposition of binderless needle-shaped crystals in the phosphor layer of the present invention, such as resistive heating, sputtering and RF induction techniques. Resistive heating vacuum deposition, may advantageously be applied as has been described e.g. in US-A's 6,720,026; 6,730,243 and 6,802,991 and in US-Application 2001/007352. This technique is recommended as a method in order to vapour deposit the needle-shaped binderless storage phosphors for a panel according to the method of the present invention. In the resistance heating evaporation, the evaporation sources are heated by supplying electric energy to the resistance heating means: crucible or boat configurations - preferably composed of refractory materials - in a vapour deposition apparatus, in order to practically realise a homogeneous deposit of vapour deposited phosphor material may be applied as has e.g. been disclosed in US-Applications 2005/000411, 2005/000447 and 2005/217567.

Vapour deposition in a vacuum deposition apparatus requires adjustment of a predetermined degree of vacuum. For a binderless needle-shaped storage phosphor layer in a panel according to the method of the present invention, forming said phosphor under a high vacuum is desirable: the degree of vacuum of 1 x 10⁻⁵ to 5 Pa, and, more specifically, from 1 x 10⁻² to 2 Pa is desired, wherein an inert gas, such as an Ar or Ne noble gas, or alternatively, nitrogen gas, may be introduced into the vacuum deposition apparatus. Evacuation to give an even lower inner pressure of 1 x 10⁻⁵ to 1 x > 10⁻² Pa is more preferred for electron beam evaporation. Introduction of oxygen or hydrogen gas may be advantageously performed, more particularly in order to enhance reactivity and/or e.g. in an annealing step. Introduction of an inert gas can moreover be performed in favour of cooling the vapour stream before deposition onto the substrate and/or the substrate, whereupon phosphor vapour raw materials should be deposited. The deposition rate generally is in the range of 0.1 to 1,000 µm/min., preferably in the range of 1 to 100 µm/min. It is not excluded to perform a pretreatment to the support, coated with the sublayer as in the present invention: in favour of an enforced drying step, the layer arrangement before phosphor deposition is held at a high temperture during a defined time. It is even not excluded to increase the relative humidity until the surface of the sublayer starts hydrating, in order to get a smooth base for the phosphor layer. Efficient deposition of the storage phosphor layer onto the substrate however, requires temperatures for the substrate in the range from 50°C to 250°C as has been disclosed in US-Application 2004/081750. Heating or cooling the substrate during the deposition process can be steered and controlled as required.

Phosphor raw materials comprising matrix and activator compounds are advantageously present as precursors in form of powders or tablets. Examples of phosphor precursor materials useful in the context of the present invention have been described in US-Applications 2005/184250, 2005/184271 and 2005/186,329. Evaporation may be performed from one or more crucibles. In the presence of more than one crucible, an independent vaporisation control may be performed in favour of uniformity, homogeneity and/or dedicated incorporation of activator or dopant. This is more particularly preferred when differences in vapour pressure between matrix and activator compound are significant.

The formed phosphor layer comprises prismatic, needle-shaped stimulable phosphor crystals which are aligned almost perpendicularly to the substrate. The thus formed phosphor layer only comprises the stimulable phosphor, without presence of a binder, and there are produced cracks extending the depth direction in the phosphor layer. In favour of image quality, especially sharpness, the needle-shaped phosphor layer may advantageously be colored with a colorant which does not absorb the stimulated emission but the stimulating rays as has e.g. been described in US-A 6,977,385.

The layer arrangement as disclosed in the present invention may further be protected with a protective layer at the side of the needle-shaped binderless phosphor layer. A transparent protective film on the surface of the stimulable phosphor layer is advantageously applied in order to ensure good handling of the radiation image storage panel in transportation steps and in order to avoid deterioration and damaging. Chemically stable, physically strong, and of high moisture proof coatings may be provided by coating the stimulable phosphor film with a solution in which an organic polymer (e.g., cellulose derivatives, polymethyl methacrylate, fluororesins soluble in organic solvents) is dissolved in a solvent, by placing a beforehand prepared sheet for the protective film (e.g., a film of organic polymer such as polyethylene terephthalate, a transparent glass plate) on the phosphor film with an adhesive, or by depositing vapor of inorganic compounds on the phosphor film. Protective layers may thus be composed of materials such as a cellulose acetate, nitrocellulose, polymethylmethacrylate, polyvinyl-butyral, polyvinyl-formal, polycarbonate, polyester, polyethylene terephthalate, polyethylene, polyvinylidene chloride, nylon, polytetrafluoroethylene and tetrafluoroethylene-6 fluoride propylene copolymer, a vinylidene-chloride-vinyl chloride copolymer, and a vinylidene-chloride-acrylonitrile copolymer. A transparent glass support may also be used as a protective layer. Moreover, by vacuum deposition, making use e.g. of the sputtering technique, a protective layer of SiC, SiO₂, SiN, and Al₂O₃ grade may be formed. Various additives may be dispersed in the protective film. Examples of the additives include light-scattering fine particles (e.g., particles of magnesium oxide, zinc oxide, titanium dioxide and alumina), a slipping agent (e.g., powders of perfluoroolefin resin and silicone resin) and a crosslinking agent (e.g., polyisocyanate). Preferred thicknesses of protective layers are in the range from 1 µm up to 20 µm for polymer coatings and even up to 2000 µm in case of inorganic materials as e.g. silicate glass. For enhancing the resistance to stain, a fluororesin layer is preferably provided on the protective film. The fluororesin layer can be form by coating the surface of the protective film with a solution in which a fluororesin is dissolved or dispersed in an organic solvent, and drying the coated solution. The fluororesin may be used singly, but a mixture of the fluororesin and a film-forming resin can be employed. In the mixture, an oligomer having polysiloxane structure or perfluoroalkyl group can be further added. In the fluororesin layer, fine particle filler may be incorporated to reduce blotches caused by interference and to improve the quality of the resultant image. The thickness of the fluororesin layer is generally in the range of 0.5 to 20 µm. For forming the fluororesin layer, additives such as a crosslinking agent, a film-hardening agent and an anti-yellowing agent can be used. In particular, the crosslinking agent is advantageously employed to improve durability of the fluororesin layer.

### Examples

While the present invention will hereinafter be described in connection with preferred embodiments thereof, it will be understood that it is not intended to limit the invention to those embodiments.

As a support material use was made of aluminum P51 from AGFA having "lithographic quality", i.e. normally used for making lithographic plates as Lithostar^{®} or Azura^{®}, trade name products from Agfa-Gevaert, Mortsel, Belgium.

Matrix compound layers were coated from aqueous CsBr solutions, differing in concentration (g of CsBr /liter) giving rise afterwards to matrix compound layers having different amounts of CsBr-salt, and wherein, as coating aids, F₃-(CF₂)₆-CO-NH-(CH₂-CH₂-O)₁₇₋₂₀-H, from Agfa, Mortsel, Belgium, was added as a surfactant to the aqueous CsBr or CsF solution in a concentration, varying in a range from 3-30 % by weight (i.e. 3.8 % for plate 410; 9.5 % for plate 411; 13.3 % for plates 404 and 409 and 28.8 % for plates 406 and 407) together with fine silica particles (average particle size: 6 nm) from LEVASIL 500, from HC STARCK, Germany, in coatings in an amount as indicated in the Table 1 hereinafter.

The aqueous layers were coated by knife-coating at a layer thickness of 25 µm and dried in an oven at 50°C during 1 hour. In a comparative example no matrix compound sublayer was coated.

A CsBr:Eu photostimulable phosphor screen was prepared on the flexible anodised aluminum plate, coated with the dried sublayer (except for the comparative sample plate), in a vacuum chamber by means of a thermal vapour deposition process, starting from a mixture of CsBr and EuOBr as raw materials. Said deposition process onto said flexible anodised aluminum support was performed in such a way that said support was rotating over the vapour stream. An electrically heated oven and a refractory tray or boat were used, in which 160-200 g of a mixture of CsBr and EuOBr as raw materials in a 99.5%/0.5% CsBr/EuOBr percentage ratio by weight were present as raw materials to become vaporised.
As a crucible an elongated boat having a length of 100 mm was used, having a width of 35 mm and a side wall height of 45 mm composed of "tantalum" having a thickness of 0.5 mm, composed of 3 integrated parts: a crucible container, a "second" plate with slits and small openings and a cover with slit outlet. The longitudinal parts were fold from one continuous tantalum base plate in order to overcome leakage and the head parts are welded. Said second plate was mounted internally in the crucible at a distance from the outermost cover plate which was less than 2/3 of said side wall height of 45 mm. Under vacuum pressure (a pressure of 2 x 10⁻¹ Pa equivalent with 2 x 10⁻³ mbar) maintained by a continuous inlet of argon gas into the vacuum chamber, and at a sufficiently high temperature of the vapour source (760°C) and the chimney the obtained vapour was directed towards the moving sheet support and was deposited thereupon successively while said support was rotating over the vapour stream. Said temperature of the vapour source was measured by means of thermocouples present outside and pressed under the bottom of said crucible and by tantalum protected thermocouples present in the crucible and in the chimney.

The (sublayer coated) anodised aluminum support having a thickness of 280 µm, a width of 10 cm and a length of 10 cm, was positioned at the side whereupon the phosphor should be deposited at a distance of 22 cm between substrate and crucible vapour outlet slit.

Plates were taken out of the vapour deposition apparatus after having run same vapour deposition times, leading to phosphor plates having phosphor layers of equal thicknesses.

For each of the matrix compound layers, besides amounts of CsBr-salt in the matrix compound layer, amounts of silica in the same layer have been given. For the Eu-doped phosphor layers coated thereupon by vapour deposition coated weight amounts of the phosphor have been summarised, as well as relative speed figures (in SAL%).

No protective sheet was further coated as adhesive strength of the phosphor layer onto the sublayer should be tested.

The data mentioned above have been set out in the Table 1, wherein relative speed (SAL%) is defined as the speed of each of the screens compared with the reference speed of an MD10^{®} reference photostimulable phosphor screen manufactured by Agfa-Gevaert, Mortsel, Belgium.

Adhesion of the layers was tested by a "tape adhesion test", wherein relative figures were given after having performed said test wherein a tape was adhered to the phosphor layer and teared off in order to control the effect upon adhesion between phosphor layer and support: "3" was related with "critical" adhesion of the reference plate (not completely satisfying - causing adhesion problems more than once), "2" indicative for a "better" adhesion (acceptable, occasionally - rarely - showing an adhesion problem) and "1" being indicative for "good" adhesion (no delamination ever observed between support and phosphor layer while tearing off the tape).

**Table 1**

| No. CB-plate | CsBr matrix layer (mg/cm²) | CsF matrix layer (mg/cm²) | Silica coating weight (wt% vs. CsBr) | CsBr:Eu phosphor layer (mg/cm²) | Adhesion Test Figure | SAL% |
|---|---|---|---|---|---|---|
| 73405 | 0 | 0 | 0 | 48.6 | 3 | 190 |
| 73404 | 0.37 | 0 | 0 | 39.8 | 2 | 225 |
| 73406 | 0.80 | 0 | 0 | 48.5 | 2 | 240 |
| 73407 | 0.80 | 0 | 10 | 48.0 | 1 | 231 |
| 73409 | 0.37 | 0 | 10 | 47.4 | 1 | 215 |
| 73410 | 0.10 | 0 | 10 | 47.1 | 1 | 210 |
| 73411 | 0 | 0.37 | 0 | 47.8 | 3 | 230 |

It is clear from the data given in Table 1 that presence of a matrix compound sublayer, coated from an aqueous solution of CsBr as matrix compound salt, provides an increased speed (see higher SAL% values). Moreover, apart for the comparative coating (CB-plate 73405), the inventive coatings provide a better, at least acceptable adhesion onto the aluminum substrate. Within the inventive phosphor plates having been prepared with a vapour deposited phosphor layer onto a dried aqueous sublayer coating of CsBr matrix compound salt, those having silica particles in the dried sublayer moreover provide a further improved adhesion of the layers coated onto the aluminum support.

Having described in detail preferred embodiments of the current invention, it will now be apparent to those skilled in the art that numerous modifications can be made therein without departing from the scope of the invention as defined in the appending claims.

## Claims

1. A Method of preparing a radiation image storage panel comprising as a layer arrangement of consecutive layers: a support, a sublayer and a stimulable phosphor layer comprising needle-shaped stimulable phosphor crystals, **characterised in that** said sublayer is a binderless non-vapour deposited layer, at least comprising an inorganic alkali metal halide salt compound selected from the group consisting of sodium fluoride, sodium chloride, sodium bromide, potassium fluoride, potassium chloride, potassium bromide, rubidium fluoride, rubidium chloride, rubidium bromide, cesium fluoride, cesium chloride and cesium bromide, wherein said binderless non-vapour deposited sublayer is coated from a solution by means of a coating technique selected from the group consisting of dip-coating, bar-coating, roller-coating and knife-coating, followed by drying, and wherein said phosphor layer is coated by a technique selected from the group consisting of physical vapor deposition, chemical vapor deposition and an atomization technique.

2. Method according to claim 1, wherein said sublayer further comprises a silicon compound.

3. Method according to claim 2, wherein said silicon compound is an inorganic colloidal silica.

4. Method according to any one of the claims 1 to 3, wherein said stimulable phosphor layer comprises needle-shaped phosphor crystals having an alkali metal halide as a matrix compound and a lanthanide as an activator compound.

5. Method according to claim 4, wherein said matrix compound and said halide compound have same composition.

6. Method according to any one of the claims 1 to 5, wherein said needle-shaped stimulable phosphor is a CsBr:Eu phosphor.

## Patentansprüche

1. Ein Verfahren zur Herstellung eines Strahlungsbildspeicherschirms, der in Form einer Schichtanordnung vorliegt, die der Reihe nach folgende Schichten umfasst : einen Träger, eine Haftschicht und eine nadelförmige ausleuchtbare Leuchtstoffkristalle enthaltende ausleuchtbare Leuchtstoffschicht, **dadurch gekennzeichnet, dass** die Haftschicht eine bindemittelfreie, nicht durch Aufdampfung aufgebrachte Schicht ist, die zumindest eine anorganische Alkalmetallhalogenidsalzverbindung aus der Gruppe bestehend aus Natriumfluorid, Natriumchlorid, Natriumbromid, Kaliumfluorid, Kaliumchlorid, Kaliumbromid, Rubidiumfluorid, Rubidiumchlorid, Rubidiumbromid, Cäsiumfluorid, Cäsiumchlorid und Cäsiumbromid enthält, wobei die bindemittelfreie, nicht durch Aufdampfung aufgebrachte Haftschicht durch eine Beschichtungstechnik aus der Gruppe bestehend aus Tauchbeschichtung, Stabbeschichtung, Walzenbeschichtung und Streichbeschichtung aus einer Lösung aufgetragen und anschließend getrocknet wird, und wobei die Leuchtstoffschicht durch eine Technik aus der Gruppe bestehend aus physikalischer Gasphasenabscheidung, chemischer Gasphasenabscheidung und Zerstäubung aufgetragen wird.

2. Verfahren nach Anspruch 1, **dadurch gekennzeichnet, dass** die Haftschicht ferner eine Siliciumverbindung enthält.

3. Verfahren nach Anspruch 2, **dadurch gekennzeichnet, dass** die Siliciumverbindung eine anorganische kolloidale Kieselerde ist.

4. Verfahren nach einem der Ansprüche 1 bis 3, **dadurch gekennzeichnet, dass** die ausleuchtbare Leuchtstoffschicht nadelförmige Leuchtstoffkristalle, die als Matrixverbindung Alkalimetallhalogenid und als Aktivatorverbindung ein Lanthanid enthalten, enthält.

5. Verfahren nach Anspruch 4, **dadurch gekennzeichnet, dass** die Matrixverbindung und die Halogenidverbindung die gleiche Zusammensetzung aufweisen.

6. Verfahren nach einem der Ansprüche 1 bis 5, **dadurch gekennzeichnet, dass** der nadelförmige ausleuchtbare Leuchtstoff ein CsBr:Eu-Leuchtstoff ist.

## Revendications

1. Procédé pour préparer un panneau d'emmagasinage d'images radiantes comprenant comme arrangement de couches successives : un support, une sous-couche et une couche de luminophore stimulable comprenant des cristaux de luminophore stimulable de configuration aciculaire, **caractérisé en ce que** ladite sous-couche est une couche exempte de liant non déposée par évaporation, comprenant au moins un composé de sel d'halogénure de métal alcalin inorganique choisi parmi le groupe constitué par le fluorure de sodium, le chlorure de sodium, le bromure de sodium, le fluorure de potassium, le chlorure de potassium, le bromure de potassium, le fluorure de rubidium, le chlorure de rubidium, le bromure de rubidium, le fluorure de césium, le chlorure de césium et le bromure de césium, ladite sous-couche exempte de liant non déposée par évaporation est coulée à partir d'une solution au moyen d'une technique d'enduction choisie parmi le groupe constitué par l'enduction par immersion, l'enduction à spirale, l'enduction au rouleau et l'enduction à la lame, avant d'être séché, ladite couche de luminophore étant coulée via une technique choisie parmi le groupe constitué par la déposition physique en phase gazeuse, la déposition chimique en phase gazeuse et une technique d'atomisation.

2. Procédé selon la revendication 1, dans lequel ladite sous-couche comprend en outre un composé de silicium.

3. Procédé selon la revendication 2, dans lequel ledit composé de silicium est une silice colloïdale inorganique.

4. Procédé selon l'une quelconque des revendications 1 à 3, dans lequel ladite couche de luminophore stimulable comprend des cristaux de luminophore de configuration aciculaire possédant un halogénure de métal alcalin à titre de composé matriciel et un lanthanide à titre de composé faisant office d'activateur.

5. Procédé selon la revendication 4, dans lequel ledit composé matriciel et ledit composé d'halogénure possèdent la même composition.

6. Procédé selon l'une quelconque des revendications 1 à 5, dans lequel ledit luminophore stimulable de configuration aciculaire est un luminophore de type CsBr:Eu.
